# EUROPEAN PATENT SPECIFICATION

(11) **EP 0 746 930 B1**
(45) Date of publication and mention of the grant of the patent: **05.10.2005**
(21) Application number: 95943397.0
(22) Date of filing: 13.12.1995
(51) Int. Cl.: H04L 27/16, H04L 27/12

(54) **FREQUENCY STABILIZED FSK TRANSMITTER**
FREQUENZSTABILISIERTER FSK-SENDER
EMETTEUR MDF STABILISE EN FREQUENCE

(30) Priority: 21.12.1994 US 360574
(43) Date of publication of application: 11.12.1996
(73) Proprietor: Lear Automotive Dearborn, Inc., Dearborn, Michigan 48126 (US)
(72) Inventor: PROKUP, James, M., Westland, MI 48185 (US); BREHMER, Gerald, M., Allen Park, MI 48101 (US)
(74) Representative: Lamb, Richard Andrew
(86) International application number: PCT/US1995/016031
(87) International publication number: WO 1996/019888

(56) References cited:
- EP-A- 0 170 793
- US-A- 5 105 162
- US-A- 5 254 958
- INTERNATIONAL JOURNAL OF ELECTRONICS, vol. 70, no. 1, 1 January 1991, pages 139-149, XP000179307 SANYAL S. K. ET AL.:: "NEW ACTIVE-R SINE WAVE OSCILLATORS: APPLICATION IN HIGH FREQUENCY CPFSK WAVE MODULATION"

## Description

### 1. Field Of The Invention

This invention relates generally to a SAW stabilized FSK transmitter and, more particularly, to a SAW stabilized FSK transmitter that is tuned to particular center operating frequencies to distinguish logical "0" and "1" data bits by a varactor diode, where a tune voltage to adjust the capacitance of the varactor diode is derived by a digital-to-analog converter.

### 1. Discussion of the Related Art

Many applications exist for a low-cost radio frequency (RF) transmitter that has a tightly controlled output frequency tolerance so as to communicate with RF data receivers that have narrow RF or intermediate frequency (IF) filters that do not use automatic frequency control. One such application is in a remote keyless entry system for a vehicle where a vehicle operator can activate certain vehicle functions, such as locking and unlocking the vehicle doors, at a location remote from the vehicle. A portable transmitter carried by the vehicle operator transmits a coded signal that includes a sequence of coded data bits that are received and deciphered by a receiver within the vehicle. If the data bit sequence matches an expected data bit sequence within the receiver, the receiver will cause the vehicle function to be performed. In a typical remote keyless entry system, the coded data bit sequence is transmitted by frequency shift keying (FSK), where the carrier frequency that transmits the data bit sequence is shifted between two center operating frequencies to distinguish a "0" bit from a "1" bit.

As is well understood, oscillator circuits are necessary to generate the carrier frequency for transmitting the coded signal from the portable remote transmitter. Surface acoustic wave (SAW) resonators are readily available devices, well known to those skilled in the art, that provide oscillation signals having adequate frequency tolerances acceptable for the applications mentioned above. The circuit matching components, i.e., transistors, capacitors, inductors and resistors, used in connection with the SAW resonator to construct the oscillator circuit increases the initial transmitter frequency tolerance as a result of component variances. In other words, even though the resonating frequency of a SAW resonator is predictable within rigid frequency tolerances, the matching components that are included as part of the oscillator circuit alter the resonating frequency in an unpredictable manner from one oscillator circuit to another. Therefore, to reduce the transmitter frequency tolerances back to an acceptable level for a particular application, some mechanism is generally required for adjusting the center operating frequency of the oscillator circuit.

Known methods for adjusting the center operating frequency of a SAW resonating oscillator circuit include tuning a variable capacitor or variable inductor that is used as a matching component in the oscillator circuit. A varactor diode is a diode that changes its capacitance depending on a voltage potential applied across it. U.S. Patent No. 5,105,162 issued to Fleissner et al discloses an electrically tuned super-regenerative RF receiver circuit that includes a variable capacitor, namely a varactor diode, that is used to vary the center operating frequency of the oscillator circuit associated with the receiver. The varactor diode is connected between a variable tuning voltage and a reference potential in which the tuning voltage varies the voltage across the varactor diode. A microprocessor is used to control the tuning voltage applied to the varactor diode.

US 5,254,958 relates to a biomedical telemetry system, and describes a phase lock loop circuit and a method for compensating data bias in a phase lock-loop circuit and maintain a center operating frequency.

International Journal of Electronics, vol. 70, no 1 1991, pages 139-149, Sanyal S.K. et al: New Active-R Sine Wave Oscillators : Application in High Frequency CPFSK Wave Modulation", describes a microprocessor controlled FSK wave generation scheme. This scheme involves the use of appropiately weighted switched tuner resistors for corresponding frequencies to be modulated in accordance with the 0-bit as 1 bit of the digital word. The scheme utilises the output from a variable duty cycle 555 times chip to operate multiplexing switches used to connect the weighted tuner resistors to an oscillator.

What is needed is a mechanism for accurately providing a tuning signal to a variable capacitor in order to generate a stable operating frequency for an oscillator circuit. It is therefore an object of the present invention to provide such a mechanism, and/or to provide improvements generally.

### SUMMARY OF THE INVENTION

According to the present invention there is provided a transmitter for transmitting a predetemined sequence of data bits, and a method of tuning a transmitter to transmitt a first frequency and a second frequency, as described in the accompanying claims.

In accordance with the teachings of an embodiment of the present invention, a SAW stabilized FSK transmitter is disclosed that is tuned to a particular center operating frequency by a varactor diode using a digital-to-analog converter. The transmitter includes an RF voltage-controlled oscillator circuit including an amplifier and a SAW resonator or SAW delay line feedback circuit. The varactor diode is included as one of the matching components of the oscillator circuit. The center operating frequency of the oscillator circuit is adjusted by changing the voltage potential across the varactor diode so that the oscillator circuit will output a center frequency f₀ for a "0" bit and a center frequency f₀ for a "1" bit. In one embodiment, the voltage potential across the varactor diode is switched for the different bits by applying different N-bit tune codes to a digital-to-analog (D/A) converter.

In order to originally tune the f₀ and f₁ center frequency signals to be within system tolerances, an RF spectrum analyzer or frequency counter and a controller are provided. The controller applies an initial N-bit tune code to a microprocessor for the D/A converter or a duty cycle tune code to a microprocessor for the PWH output signal. The oscillator circuit is then enabled, and a frequency signal transmitted by the oscillator circuit is received by an antenna associated with the RF spectrum analyzer. If the transmitted frequency signal is not within a predetermined tolerance, the controller will cause the N-bit tune code for the D/A converter to be incremented up or down in a manner that will cause the transmitted frequency received by the RF spectrum analyzer to be within the predetermined tolerance. This process is performed for both the f₀ and f₁ frequencies. The final tune codes for the f₀ and f₁ frequencies are stored in the microprocessor for operation.

Additional objects, advantages, and features of the present invention will become from the following description and appended claims, taken in conjunction with the accompanying drawings.

There is also disclosed, but not forming part of the claimed invention, an alternative arrangement in which the voltage potential accross the varactor diode is switched by changing the duty cycle of a pulse width modulation signal from a microprocessor instead of using a D/A converter.

### BRIEF DESCRIPTION OF THE DRAWINGS

Figure 1 is a schematic diagram of a SAW stabilized FSK transmitter that is tuned by a digital-to-analog converter according to one embodiment of the present invention;
Figure 2 is a block schematic diagram of the transmitter of Figure 1 showing how the digital-to-analog converter is initially tuned;
Figure 3 is a schematic diagram of a SAW stabilized FSK transmitter that is tuned by a pulse-width modulation signal;
Figure 4 is a schematic block diagram of the transmitter of Figure 3 showing how the pulse-width modulation signal is initially tuned; and
Figures 5A and 5B are a flow chart diagram showing how the transmitters of Figures 1-4 are initially tuned.

### DETAILED DESCRIPTION OF THE PREFERRED EMBODIMENTS

The following discussion concerning tuning the center operating frequency of a SAW stabilized FSK transmitter is merely exemplary in nature and is in no way intended to limit the invention or its applications or uses.

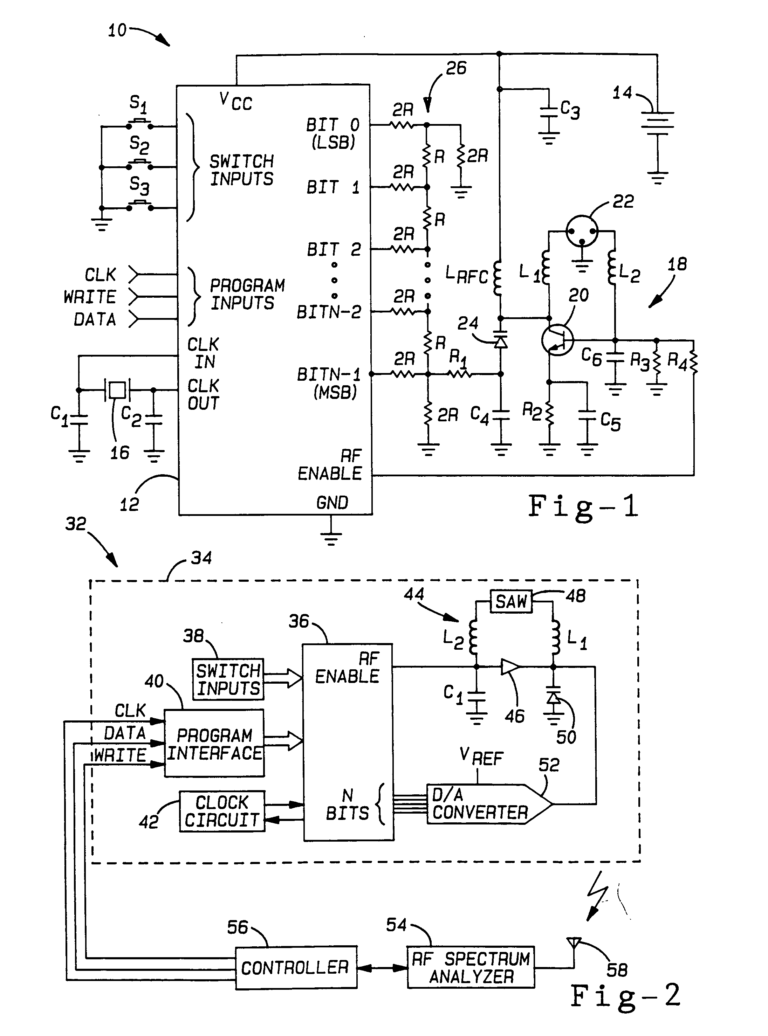

Figure 1 shows a schematic diagram of a transmitter circuit 10 according to a preferred embodiment of the present invention. The transmitter circuit 10 is microprocessor controlled by a microprocessor 12. A voltage potential V_{CC} from a battery 14, for example a nickel-cadmium battery, powers the transmitter circuit 10. A series of function switches S₁-S₃ are connected to input ports of the microprocessor 12 in order to activate the transmitter circuit 10 and cause it to transmit a predetermined signal. In one embodiment, the transmitter circuit 10 is a portable transmitter associated with a remote keyless entry system in which the function switches S₁-S₃ cause the microprocessor 12 to broadcast a predetermined encoded serial data bit message to be received by a receiver unit (not shown) associated with a vehicle (not shown), where the receiver unit will cause the vehicle function to be performed if the coded message is valid. Clock (CLK), write and data program ports are provided in order to program and apply data to the microprocessor 12. A crystal oscillator 16 provides a stable oscillation frequency for a clock input to the microprocessor 12 in order to control the operation of the microprocessor 12, as is well understood in the art. Capacitors C₁ and C₂ provide filtering for the crystal oscillator 16.

The transmitter circuit 10 includes an RF voltage-controlled oscillator circuit shown generally at 18. The oscillator circuit 18 includes a common emitter amplifier comprising a linear bipolar transistor 20 and DC bias resistors R₂, R₃ and R₄. It will be appreciated by those skilled in the art that the common emitter amplifier can be replaced with other amplifiers such as common base, common collector and field effect transistor amplifiers. The oscillator circuit 18 further includes a feedback circuit including a SAW resonator SAW delay line 22 electrically connected between the collector terminal and the base terminal of the transistor 20. The oscillator circuit 18 also includes matching components comprising inductors L₁ and L₂, capacitor C₆, and a varactor diode 24. It is the matching components that vary the center operating frequency of the SAW resonator 22 from one transmitter to another in an unpredictable manner. The anode of the varactor diode 24 is connected to the battery 14 through an inductor L_{RFC}. The cathode of the varactor diode 24 is connected to the output of a digital-to-analog (D/A) converter shown generally at 26. The D/A converter 26 is an R-2R resistive ladder network connected to a series of N output data ports of the microprocessor 12. R-2R resistive ladder network acting as digital-to-analog converters are well known in the art. The inductor L_{RFC} provides a high impedance device that passes a DC voltage to the varactor diode 24 from the battery 14, but acts as an open circuit at RF operating frequencies. The inductor L₁ acts as an antenna for radiating the frequency signal generated by the oscillator circuit 18, and can be an inductor trace on a printed circuit board that includes the components of the transmitter circuit 10.

The oscillator circuit 18 is activated by a "high" signal from an RF enable output port of the microprocessor 12. The "high" signal from the RF enable output port is applied to the base terminal of the transistor 20 and to the SAW resonator 22 through a current limiting resistor R₄. The signal on the base terminal of the transistor 20 and the SAW resonator 22 causes the oscillator circuit 18 to resonate at a center operating frequency that is determined by the center oscillation frequency of the SAW resonator 22 and the characteristics of the matching components. The voltage generated by the resonation of the oscillator circuit 18 is radiated by the inductor L₁.

Data bits transmitted by the transmitter circuit 10 are transmitted by frequency shift keying (FSK) modulation. In other words, the oscillator circuit 18 will output a frequency f₀ when a "0" bit is being transmitted, and will output a frequency f₁ when a "1" bit is being transmitted. The microprocessor 12 allows an adequate number of oscillation cycles at f₀ and f₁ to be transmitted for each "0" or "1" bit that will allow the receiver to decipher the serial data message. In order to change the output frequency of the oscillator circuit 18 from f₀ to f₁, or from f₁ to f₀, so as to change the bit being transmitted, the capacitance of the varactor diode 24 is adjusted accordingly. When the capacitance of the varactor diode 24 decreases, the oscillation frequency of the oscillator circuit 18 increases, and when the capacitance of the varactor diode 24 increases, the oscillation frequency of the oscillator circuit 18 decreases. In order to adjust the capacitance on the varactor diode 24, an appropriate voltage is applied to its cathode. The N-bit output applied to the D/A converter 26 determines the voltage potential across the varactor diode 24, and thus the amount of charge the diode 24 will store. The most significant bit (MSB) of the N output bits is applied through a resistor R₁ to the anode of the varactor diode 24, as shown. The larger the data word applied to the D/A converter 26, the greater the voltage potential applied to the varactor diode 24. For example, a minimum voltage will be applied to the anode of the varactor diode 24 if all of the bits are zero, and a maximum voltage will be applied to the anode of the varactor diode 24 if all of the bits are one. Consequently, by changing the data bit sequence applied to the D/A converter 26, a decrease or increase in the oscillation frequency of the oscillator circuit 18 can be achieved. The microprocessor 12 will store a tune bit code to apply to the D/A converter 26 for both the f₀ and f₁ frequencies.

The microprocessor 12 monitors the function switches S₁-S₃ to determine whether they have been activated. When one of the switches S₁-S₃ has been activated, the microprocessor 12 will generate a function code depending on which switch was pressed. The function code is combined with a unique identification (ID) code stored within a memory of the microprocessor 12. The combination of the function code bits and the ID code bits form a serial data bit message that is to be transmitted. For example, a vehicle operator wishing to unlock a vehicle door as he approaches the vehicle will activate function switch S₁ that has a function code having the bit sequence 01. This bit sequence is combined with an ID code bit sequence 0011 to generate a serial data message 010011. The microprocessor 12 reads the first bit of the serial data bit message. If the first bit is a 1, the tune code for a 1 bit is sent to the D/A converter 26. If the first bit were a 0 bit, the tune code for a 0 bit would be sent to the D/A converter 26. If the D/A converter 26 received five bits to make up the tune code, the tune code for f₀ could be, for example, 01111, and the tune code for f₁ could be 10000. The microprocessor 12 proceeds to transmit the entire serial data bit message in this manner. When the microprocessor 12 generates the serial data bit message, it also enables the oscillator circuit 18 by switching the enable port high. The N-bit output of the microprocessor 12 sends the serial data bit message to the D/A converter 26 one bit at a time until all of the data bits have been sent. The oscillator circuit 18 is then switched off by switching the RF enable port to "low".

Figure 2 is a schematic block diagram of a tuning system 32 that is provided to show how the transmitter circuit 10 is initially tuned to the f₀ and f₁ frequencies to be within predetermined tolerances. In other words, the microprocessor 12 needs to be initially programmed to generate the appropriate N-bit tune code for the D/A converter 26 that causes the varactor diode 24 to have the appropriate capacitance so as to enable the oscillator circuit 18 to generate f₀ and f₁ within the necessary tolerances of the system. The system 32 includes a transmitter 34 intended to represent the transmitter circuit 10 discussed above. The transmitter 34 includes a microprocessor 36 being the same as the microprocessor 12 above. Likewise, switch inputs 38 represent the switches S₁-S₃, a program interface 40 provides an interface to apply the clock, write and data program inputs to the microprocessor 36, and a clock circuit 42 represents the crystal oscillator 16 and the capacitors C₁ and C₂. The oscillator circuit 18 is shown as an oscillator circuit 44 including a common emitter amplifier 46, a SAW resonator feedback circuit 48, a varactor diode 50, an inductor L₁ acting as an antenna, and matching components inductor L₂ and a capacitor C₁. The N data bits from the microprocessor 36 are applied to a D/A converter 52 representing the D/A converter 26.

Each transmitter will have a unique ID code. Additionally, the "1" bit and "0" bit tune codes will be different for each individual transmitter since the SAW resonators, varactor diodes, inductors, and other frequency devices, will be different. In order to initially tune the f₀ and f₁ output frequencies of the transmitter 34 to be within acceptable tolerances, an RF spectrum analyzer 54 acting as a frequency counter is provided. A controller 56 controls and interfaces the RF spectrum analyzer 54 to the transmitter 34 through the program interface 40. The controller 56 writes the initial software program to operate the microprocessor 36 to a memory of the microprocessor 36 on the write line. The controller 56 also enters an initial N-bit tune codes f₀ and f₁ to the microprocessor 36. The controller 56 then instructs the microprocessor 36 to enable the oscillator circuit 44, and to output the initial N-bit tune code for f₀ to the D/A converter 52. It is possible for the controller 56 to set an initial f₀ tune code as the lowest bit sequence that will produce the lowest frequency value for f₀, however, it is generally known approximately what the appropriate output bits should be for each tune code, and it is therefore more efficient to generate a series of output bits near this value.

Once the N-bit tune code is applied to the D/A converter 52, the signal transmitted by the antenna L, is received by an antenna 58 associated with the spectrum analyzer 54. The spectrum analyzer 54 determines the frequency of the signal received by the antenna 58, and sends a signal indicative of this frequency to the controller 56. The signal received by the antenna 58 is compared with a desired f₀ frequency stored in the controller 56. The desired f₀ frequency stored in the controller 56 represents the frequency that a receiver will be looking for from the transmitter 34 when it is in use. The controller 56 determines if the frequency of the signal received by the antenna 58 is within a specified tolerance when compared with the desired frequency. If the received frequency signal is outside of the specified tolerance, the microprocessor 36 will increase or decrease the N-bit tune code accordingly. This procedure is repeated until the transmitted frequency is within the frequency tolerance limit for the f₀ frequency. The corresponding N-bit tune code is then saved in the microprocessor 36 as the f₀ frequency tune code. This procedure is repeated for the "1" bit. Once the "0" bit and the "1" bit tune codes have been determined and stored, these codes are written to a permanent memory within the microprocessor 36 along with a unique transmitter ID code.

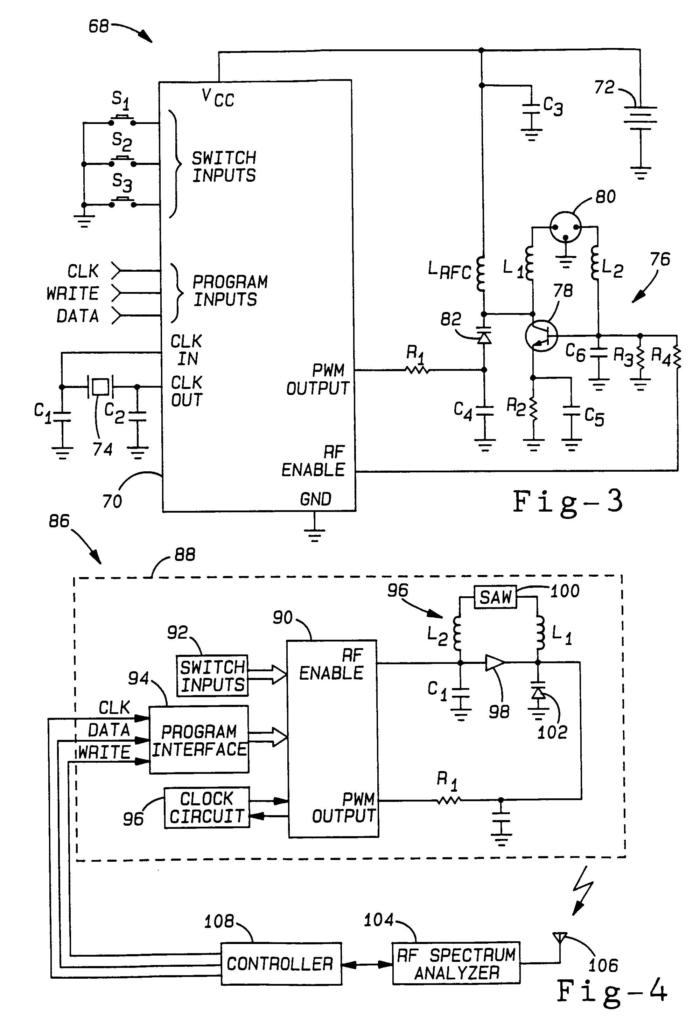

Figure 3 shows a schematic diagram of a transmitter circuit 68 that includes similar components to the transmitter circuit 10 discussed above. The transmitter circuit 68 includes a microprocessor 70 powered by a battery 72, function switches S₁-S₃, CLK, write and data program input ports, and a crystal oscillator 74. Further, the transmitter circuit 68 includes an RF voltage-controlled oscillator circuit 76 including a common emitter amplifier comprising a bipolar transistor 78, DC bias resistors R₂, R₃ and R₄, a SAW resonator feedback circuit 80, and a varactor diode 82. The feedback circuit 80 also includes matching components L₁, L₂ and C₆, where L₁ is a radiating antenna. The operation of these components, as well as other components not specifically mentioned, associated with the transmitter circuit 68 is identical to the like components of the transmitter circuit 10, discussed above.

Instead of a D/A converter for providing the tuning signal to the varactor diode 82, the transmitter circuit 68 uses a pulse-width modulation (PWM) output signal derived from the microprocessor 70 that is applied to the anode of the varactor diode 82 through a voltage limiting resistor R₁ as shown. The width of the pulses of the pulse-width modulation output signal from the microprocessor 70 represents the duty cycle of the pulse-width modulation output signal. The duty cycle of the pulse-width modulation output is determined by a duty cycle tune code stored in a memory of the microprocessor 70. The duty cycle tune code can be represented by any appropriate number of bits that will give enough bit values to tune the frequency of the oscillator circuit 76 to a desired frequency within the acceptable tolerance. In one example, the tune code for the f₀ frequency is the bit sequence 011, and the tune code for the f₁ frequency is the bit sequence 100. The period of the pulses of the pulse-width modulation signal is much shorter than the period for transmitting a data bit. The pulse-width modulation output is low-pass filtered by the resistor R₁ and a capacitor C₄ before being applied to the varactor diode 82. The length of time that the pulses are high as they are applied to the anode of the varactor diode 82 determines how long the anode of the varactor diode 82 will be at the voltage potential of the PWM signal. The longer the voltage potential at the anode of the varactor diode 82 is high, the more charge will be stored in the varactor diode 82. Therefore, by applying PWM signals to the varactor diode 82 of different pulse widths, the capacitance of the varactor diode 82 is changed so as to adjust the center frequency of the oscillator circuit 76 and distinguish "0" and "1" bits. The pulse-width modulation output signal from the microprocessor 70 can be generated in software.

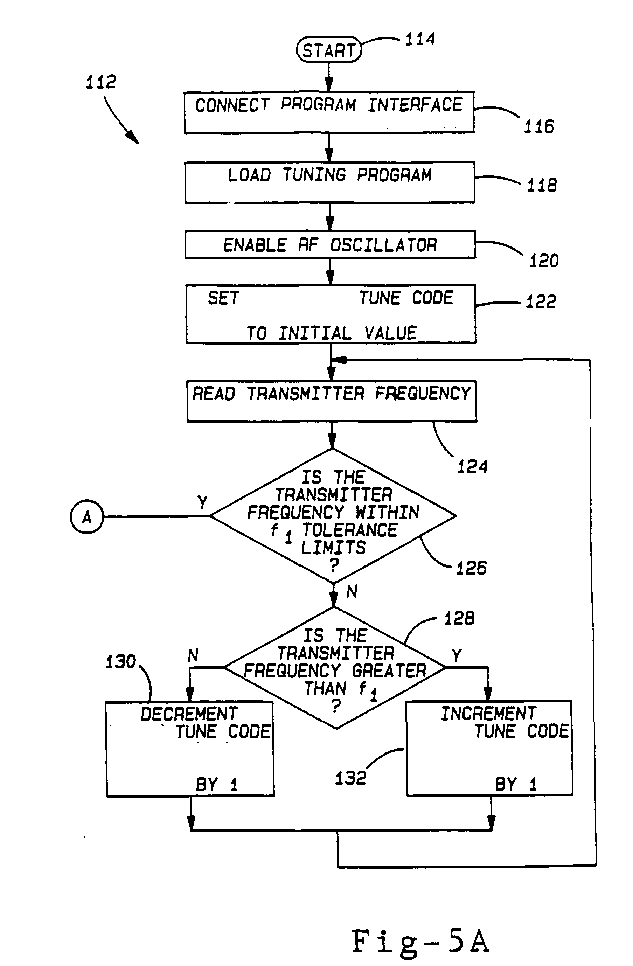

Figure 4 shows a schematic block diagram of a tuning system 86 including a transmitter 88 representing the transmitter circuit 68 discussed above. The transmitter 88 includes a microprocessor' 90 representing the microprocessor 70. The microprocessor 90 includes switch inputs representing the function switches S₁-S₃, a program interface 94 for interfacing the clock, write and data program inputs applied to the microprocessor 70, and a clock circuit 96 representing the crystal oscillator 74 and the capacitor C₁ and C₂. The transmitter 88 further includes an oscillator circuit 96 including a common emitter amplifier 98, a SAW resonator feedback circuit 100 and a varactor diode 102. An inductor L₁ acts as a radiating antenna.

The system 86 further includes an RF spectrum analyzer 104 including an antenna 106. The spectrum analyzer 104 is controlled by a controller 108 that includes output lines to the clock, data and write input lines applied to the program interface 94. The spectrum analyzer 104 and the controller 108 operate in the same fashion as the spectrum analyzer 54 and the controller 56, discussed above. When the initial tune codes for either the f₀ frequency or the f₁ frequency are sent to the microprocessor 90 by the controller 108, and the controller 108 enables the microprocessor 90, the antenna 106 will receive the frequency signal radiated by the inductor L₁. If the received frequency signal is not within the specified tolerances, the controller 108 will cause the microprocessor 90 to increase or decrease the tune code for the PWM output signal accordingly so as to increase or decrease the frequency signal radiated by the antenna L₁. Once the signal received by the antenna 106 is within the predetermined tolerances, the corresponding duty cycle tune code is saved in the memory of the microprocessor 90 for f₀ and f₁.

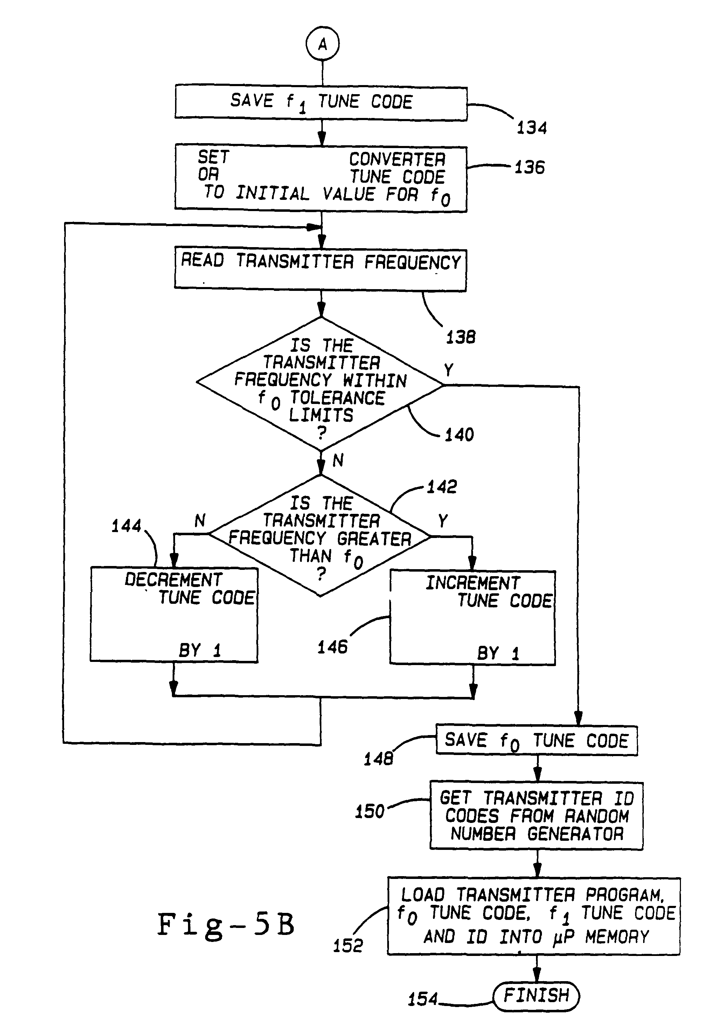

Figures 5A and 5B show a flow chart diagram 112 describing the process of how the output frequency of both the transmitters 34 and 88 are initially tuned by a programming procedure. A block 114 represents the initiation of the tuning and programming procedure for providing predetermined tune frequencies f₀ and f₁. A block 116 represents the connection of the controller 56 to the microprocessor 36 or the controller 108 to the microprocessor 90. A block 118 represents loading the tuning program into the microprocessors 36 or 90. A block 120 represents enabling the oscillator circuits 44 or 96 at the RF enable port so as to activate the oscillator circuits 44 or 96. A block 122 represents setting the initial tune code for f₁ as the N-bit D/A converter initial tune code or the pulse-width modulation duty cycle initial tune code. A block 124 represents determining the transmitted frequency in the controllers 58 or 108 from the spectrum analyzers 54 or 104, respectfully, for the initial f₁ tune code. A decision diamond 126 determines whether the transmitted frequency is within a predetermined tolerance limit of f₁. If the answer is no to the question of whether the transmitted frequency is within the tolerance limit, a decision diamond 128 determines whether the transmitted frequency is greater than or less than the predetermined frequency f₁. If the transmitted frequency is greater than f₁, then the N-bit tune code for the D/A converter 52 is decremented by one, or the tune code for the duty cycle of the pulse-width modulation output is decremented by one, as represented by block 130. If the transmitted frequency is less than the predetermined f₁, then the N-bit tune code for the D/A converter 52 is incremented by one, or the tune code for the duty cycle of the pulse-width modulation output is incremented by one, as indicated by block 132. Of course it is possible to increment or decrement the tune codes by more than one if the transmitted frequency is significantly outside of the tolerance limit. Once the tune code f₁ is adjusted, the process returns to the step of reading the transmitted frequency at the block 124 until the answer of whether the transmitted frequency is within the tolerance limit at the decision diamond 126 is yes.

Once the transmitted frequency is within the tolerance limit, the tune code for f₁ is saved in the controller 56 or 108 as indicated by block 134. The process is then initiated for the f₀ tune code. At block 136, the initial tune code for f₀ for the N-bit D/A converter tune code or the duty cycle tune code is set. A block 138 represents determining the transmitted frequency in the controllers 58 or 108 from the spectrum analyzers 54 or 104, respectfully. A decision diamond 140 determines whether the transmitted frequency is within the predetermined tolerance limit of f₀. If the answer is no to the question of whether the transmitted frequency is within the tolerance limit, a decision diamond 142 determines whether the transmitted frequency is greater than or less than the predetermined frequency f₀. If the transmitted frequency is greater than the f₀, then the N-bit tune code is decremented by one for the D/A converter 52, or the tune code for the duty cycle of the pulse-width modulation output is decremented by one, as represented by block 144. If the received frequency is less than f₀, then the N-bit tune code for the D/A converter 52 is incremented by one or the tune code for the duty cycle of the pulse-width modulation output is incremented by one, as indicated block 146. Once the tune code for f₀ is adjusted, the process returns to the step of reading the transmitted frequency at the block 138 until the answer of whether the transmitted frequency is within the tolerance limits at the decision diamond 140 is yes.

Once the transmitted frequency is within the tolerance limit, the tune code for f₀ is saved in the controller 56 or 108 as indicated by block 148. The transmitter ID code is then written to the microprocessor 36 or 90 from a random number generated within the controller 58 or 108 as represented by block 150. Next, the controllers 58 or 108 load the transmitter program, the f₀ tune code, the f₁ tune code and the ID code into the memory of the microprocessor 36 or 90 as represented by block 152. Once the microprocessors 36 or 90 is programmed and the tune frequencies are set, the transmitter 38 or 88 is ready for operation, and the program procedure is finished as represented by block 154.

The foregoing discussion discloses and describes merely exemplary embodiments of the present invention. One skilled in the art will readily recognize from such discussion, and from the accompanying drawings and claims that various changes, modifications and variations can be made therein without departing from the scope of the invention as defined in the following claims.

## Claims

1. A transmitter (10) for transmitting a predetermined sequence of data bits by frequency shift keying where the transmitter (10) transmits a first frequency f₀ to represent a "0" bit and a second frequency f₁ to represent a "1" bit, said transmitter (10) comprising:
a microprocessor (12, 36) that controls the operation of the transmitter (10), said microprocessor (12, 36) generating the sequence of data bits;
an oscillator circuit (18, 44) being generating a frequency output signal that corresponds to the sequence of data bits, said oscillator circuit (18, 44) including a component (24, 50) that tunes the center operating frequency of the oscillator circuit (18, 44); and
a digital-to-analog converter (26, 52) being responsive to an N-bit tune code from the microprocessor (12, 36), said digital-to-analog converter (26, 52) having an output connected to the component (24, 50) that tunes the oscillator circuit (18, 44), wherein the N-bit tune code applied to the digital-to-analog converter (26, 52) adjusts a control signal applied to the component (24, 50) that tunes the frequency of the oscillator circuit (18, 44) such that a first N-bit tune code is applied to the digital-to-analog converter (26, 52) to transmit the first frequency and a second N-bit tune code is applied to the D/A converter (26, 52) to transmit the second frequency f₁, wherein the control signal comprises a voltage potential corresponding to the N-bit tune code.

2. The transmitter (10) according to Claim 1 wherein the digital-to-analog converter (26, 52) is an R-2R resistive ladder network.

3. The transmitter (10) according to Claim 1 wherein the transmitter (10) is responsive to a controller (56) so as to tune the transmitter (10), said controller (56) being operable to cause the microprocessor (12, 36) to output an initial N-bit tune code to the digital-to-analog converter (26, 52) for the first frequency f₀ and to activate the oscillator circuit (18, 44), a frequency counter (54) being responsive to a first frequency signal transmitted by the transmitter (10), said controller (56) being responsive to a signal indicative of the first transmitted frequency signal from the frequency counter (54), said controller (56) comparing the first transmitted frequency signal to the first frequency f₀ so as to determine whether the first transmitted frequency signal is within a predetermined tolerance of the first frequency f₀, said controller (56) being operable to cause the microprocessor (12, 36) to either increase or decrease the initial N-bit tune code for the first frequency f₀ depending on whether the first transmitted frequency signal is greater than or less than the first frequency f₀ if the first transmitted frequency signal is not within the predetermined tolerance.

4. The transmitter (10) according to Claim 3 wherein the controller (56) is operable to cause the microprocessor (12, 36) to output an initial N-bit tune code to the digital-to-analog converter for the second frequency f₁, said frequency counter (54) being responsive to a second transmitted frequency signal from the transmitter (10), said controller (56) being responsive to a signal indicative of the second transmitted frequency signal from the frequency counter (54), said controller (56) comparing the second transmitted frequency signal to the second frequency f₁ so as to determine whether the second transmitted frequency signal is within a predetermined tolerance of the second frequency f₁, said controller (56) being operable to cause the microprocessor (12, 36) to either increase or decrease the initial N-bit tune code for the second frequency f₁ depending on whether the second transmitted frequency signal is greater than or less than the second frequency f₁ if the second transmitted frequency signal is not within the predetermined tolerance.

5. The transmitter (10) according to Claim 1 wherein the component (24, 50) that tunes the oscillator circuit (18, 44) is a varactor diode.

6. The transmitter (10) according to claim 1 wherein the oscillator circuit (18, 44) includes an amplifier and a surface acoustic wave feedback circuit.

7. A method of tuning a transmitter (10) to transmit a sequence of data bits, where the transmitter transmits a first frequency f₀ to represent a "0" bit and a second frequency f₁ to represent a "1" bit, said method comprising the steps of:
providing a microprocessor (12, 36) that controls the operation of the transmitter (10);
providing an oscillator circuit (18, 44) that generates a predetermined frequency output signal, said oscillator circuit (18, 44) including a component (24, 50) that tunes the center operating frequency of the oscillator circuit (18, 44); and
providing a digital-to-analog converter (26, 52) that receives an N-bit tune code from the microprocessor (12, 36), said digital-to-analog converter (26, 52) applying a control signal to the component (24, 50) that tunes the center frequency of the oscillator circuit (18, 44), wherein the N-bit tune code controls the control signal applied to the component (24, 50) that tunes the frequency of the oscillator circuit (18, 44) such that a first N-bit tune code is applied to the digital-to-analog converter (26, 52) to transmit the first frequency f₀ and a second N-bit tune code is applied to the digital-to-analog converter to transmit the second frequency f₁, wherein the control signal comprises a voltage potential corresponding to the N-bit tune code.

8. The method according to Claim 7 further comprising the steps of providing a frequency counter (54) and providing a controller (56), said step of providing a controller (56) including using the controller (56) to cause the microprocessor (12, 36) to output an initial N-bit tune code to the digital-to-analog converter (26, 52) for the first frequency f₀ and to activate the oscillator circuit (18, 44), said step of providing a frequency counter (54) including using the frequency counter (54) to receive a first frequency signal transmitted by the transmitter (10) when the controller (56) activates the oscillator circuit (18, 44), said controller (56) being responsive to a signal indicative of the first transmitted frequency signal from the frequency counter (54), said controller (56) comparing the first transmitted frequency signal to the first frequency f₀ so as to determine whether the first transmitted frequency signal is within a predetermined tolerance of the first frequency f₀, said controller causing the microprocessor to either increase or decrease the initial N-bit tune code for the first frequency f₀ depending on whether the first transmitted frequency signal is greater or less than the first frequency f₀ if the first transmitted frequency signal is not within the predetermined tolerance.

9. The method according to Claim 8 wherein the steps of providing a frequency counter (54) and providing a controller (56) includes using the controller (56) to cause the microprocessor (12, 36) to output an initial N-bit tune code to the digital-to-analog converter (26, 32) for the second frequency f₁, said step of providing a frequency counter (54) including using the frequency counter (54) to receive a second transmitted frequency signal from the transmitter (10), said controller (56) being responsive to a signal indicative of the second transmitted frequency signal from the frequency counter (54), said controller (56) comparing the second transmitted frequency signal for the second frequency f₁ so as to determine whether the second transmitted frequency signal is within a predetermined tolerance of the second frequency f₁, said controller (56) causing the microprocessor (12, 36) to either increase or decrease the initial N-bit tune code for the second frequency f₁ depending on whether the second transmitted frequency signal is greater than or less than the second frequency f₁ if the second transmitted frequency signal is not within the predetermined tolerance.

10. The method according to Claim 7 wherein the step of providing an oscillator circuit (18, 44) includes providing an oscillator circuit (18, 44) that includes a varactor diode that tunes the center operating frequency of the oscillator circuit.

11. The method according to either one of Claims 7 wherein the step of providing an oscillator circuit (18, 44) includes providing an oscillator circuit (18, 44) having an amplifier and a surface acoustic wave feedback circuit.

## Patentansprüche

1. Sender (10) zum Senden einer vorbestimmten Sequenz von Datenbits durch Frequenzmodulation, wobei der Sender eine erste Frequenz f₀, um ein "0"-Bit darzustellen, und einen zweite Frequenz f₁ sendet, um ein "1"-Bit darzustellen, und der Sender (10) enthält:
einen Mikroprozessor (12, 36), der den Betrieb des Senders (10) steuert, wobei der Mikroprozessor (12, 36) die Datenbitsequenz erzeugt;
eine Oszillatorschaltung (18, 44), die ein Frequenzausgangssignal erzeugt, das der Datenbitsequenz entspricht, wobei die Oszillatorschaltung (18, 44) eine Komponente (24, 50) enthält, die die Mittenbetriebsfrequenz der Oszillatorschaltung (18, 44) abstimmt; und
einen Digital/Analogwandler (26, 52), der auf einen N-Bit-Abstimmcode vom Mikroprozessor (12, 36) reagiert, wobei der Digital/Analogwandler (26, 52) einen Ausgang hat, der mit der Komponente (24, 50) verbunden ist, die die Oszillatorschaltung (18, 44) abstimmt, wobei der N-Bit-Abstimmcode, der dem Digital/Analogwandler (26, 52) zugeführt wird, ein Steuersignal einstellt, das der Komponente (24, 50) zugeführt wird, die die Frequenz der Oszillatorschaltung (18, 44) derart abstimmt, dass ein erster N-Bit-Abstimmcode dem Digital/Analogwandler (26, 52) zugeführt wird, um die erste Frequenz f₀ zu senden, und ein zweiter N-Bit-Abstimmcode dem D/A-Wandler (26, 52) zugeführt wird, um die zweite Frequenz f₁ zu senden, wobei das Steuersignal ein Spannungspotential enthält, das dem N-Bit-Abstimmcode entspricht.

2. Sender (10) nach Anspruch 1, bei dem der Digital/Analogwandler (26, 52) eine R-2R-Widerstandsreihenschaltung ist.

3. Sender (10) nach Anspruch 1, bei dem der Sender (10) auf die Steuerung (56) reagiert, um den Sender (10) abzustimmen, wobei die Steuerung (56) so betrieben werden kann, dass sie bewirkt, dass der Mikroprozessor (12, 36) einen Ausgangs-N-Bit-Abstimmcode an den Digital/Analogwandler (26, 52) für die erste Frequenz f₀ ausgibt und die Oszillatorschaltung (18, 44) aktiviert, ein Frequenzzähler (54) auf ein erstes Frequenzsignal reagiert, das vom Sender (10) gesendet wird, die Steuerung (56) auf ein Signal reagiert, das für das erste Frequenzsignal kennzeichnend ist, das vom Frequenzzähler (54) gesendet wird, die Steuerung (56) das erste gesendete Frequenzsignal mit der ersten Frequenz f₀ vergleicht, um zu bestimmen, ob das erste gesendete Frequenzsignal innerhalb einer vorbestimmten Toleranz der ersten Frequenz f₀ liegt, und die Steuerung (58) so betrieben werden kann, dass sie den Mikroprozessor (12, 36) veranlasst, den Ausgangs-N-Bit-Abstimmcode für die erste Frequenz f₀ in Abhängigkeit davon zu erhöhen oder zu verringern, ob das erste gesendete Frequenzsignal größer oder geringer ist als die erste Frequenz f₀, wenn das erste gesendete Frequenzsignal nicht innerhalb der vorbestimmten Toleranz liegt.

4. Sender (10) nach Anspruch 3, bei dem die Steuerung (56) so betrieben werden kann, dass sie bewirkt, dass der Mikroprozessor (12, 36) einen Ausgangs-N-Bit-Abstimmcode an den Digital/Analogwandler für die zweite Frequenz f₁ sendet, wobei der Frequenzzähler (54) auf ein zweites gesendetes Frequenzsignal vom Sender (10) reagiert, die Steuerung (56) auf ein Signal reagiert, das für das zweite gesendete Frequenzsignal vom Frequenzzähler (54) kennzeichnend ist, die Steuerung (56) das zweite gesendete Frequenzsignal mit der zweiten Frequenz f₁ vergleicht, um so zu ermitteln, ob das zweite gesendete Frequenzsignal innerhalb einer vorbestimmten Toleranz der zweiten Frequenz f₁ liegt, und die Steuerung (56) so betrieben werden kann, das sie bewirkt, dass der Mikroprozessor (12, 36) den Ausgangs-N-Bit-Abstimmcode für die zweite Frequenz f₁ in Abhängigkeit davon erhöht oder verringert, ob das zweite gesendete Frequenzsignal größer oder kleiner als die zweite Frequenz f₁ ist, wenn das zweite gesendete Frequenzsignal nicht innerhalb der vorbestimmten Toleranz liegt.

5. Sender (10) nach Anspruch 1, bei dem die Komponente (24, 50), die die Oszillatorschaltung (18, 44) abstimmt, eine Varaktordiode ist.

6. Sender (10) nach Anspruch 1, bei dem die Oszillatorschaltung (18, 44) einen Verstärker und eine akustische Oberflächenwellen-Rückkopplungsschaltung enthält.

7. Verfahren zum Abstimmen eines Senders (10) um eine Datenbitsequenz zu senden, wobei der Sender eine erste Frequenz f₀, um ein "0"-Bit darzustellen, und eine zweite Frequenz f₁ sendet, um ein "1 "-Bit darzustellen, und das Verfahren folgende Schritte enthält:
Bereitstellen eines Mikroprozessors (12, 36), der den Betrieb des Senders (10) steuert;
Bereitstellen einer Oszillatorschaltung (18, 44), die ein vorbestimmtes Frequenzausgangssignal erzeugt, wobei die Oszillatorschaltung (18, 44) eine Komponente (24, 50) enthält, die die Mittenbetriebsfrequenz der Oszillatorschaltung (18, 44) abstimmt; und
Bereitstellen eines Digital/Analogwandlers (26, 52), der einen N-Bit-Abstimmcode vom Mikroprozessor (12, 36) empfängt, wobei der Digital/Analogwandler (26, 52) ein Steuersignal der Komponente (24, 50) zuführt, die die Mittenbetriebsfrequenz der Oszillatorschaltung (18, 44) abstimmt, wobei der N-Bit-Abstimmcode das Steuersignal steuert, das der Komponente (24, 50) zugeführt wird, die die Frequenz der Oszillatorschaltung (18, 44) derart steuert, dass ein erster N-Bit-Abstimmcode dem Digital/Analogwandler (26, 52) zugeführt wird, um die erste Frequenz f₀ zu senden, und ein zweiter N-Bit-Abstimmcode dem Digital/Analogwandler zugeführt wird, um die zweite Frequenz f₁ zu senden, wobei das Steuersignal ein Spannungspotential enthält, das dem N-Bit-Abstimmcode entspricht.

8. Verfahren nach Anspruch 7, weiterhin enthaltend die Schritte des Bereitstellens eines Frequenzzählers (54) und des Bereitstellens einer Steuerung (56), wobei der Schritt des Bereitstellens einer Steuerung (56) die Verwendung der Steuerung (56) derart beinhaltet, dass sie bewirkt, dass der Mikroprozessor (12, 36) einen Ausgangs-N-Bit-Abstimmcode an den Digital/Analogwandler (26, 52) für die erste Frequenz f₀ ausgibt und die Oszillatorschaltung (18, 44) aktiviert, wobei der Schritt des Bereitstellens eines Frequenzzählers (54) die Verwendung des Frequenzzähler (54) derart beinhaltet, dass er ein erstes Frequenzsignal empfängt, das durch den Sender (10) gesendet wird, wenn die Steuerung (54) die Oszillatorschaltung (18, 44) aktiviert, wobei die Steuerung (56) auf ein Signal reagiert, das für das erste gesendete Frequenzsignal vom Frequenzzähler (54) kennzeichnend ist, und die Steuerung (56) das erste gesendete Frequenzsignal mit der ersten Frequenz f₀ vergleicht, um zu ermitteln, ob das erste gesendete Frequenzsignal innerhalb einer vorbestimmten Toleranz der ersten Frequenz f₀ liegt, die Steuerung bewirkt, dass der Mikroprozessor den Ausgangs-N-Bit-Abstimmcode für die erste Frequenz f₀ in Abhängigkeit davon erhöht oder verringert, ob das erste gesendete Frequenzsignal größer oder kleiner ist als die erste Frequenz f₀, sofern das erste gesendete Frequenzsignal nicht innerhalb der vorbestimmten Toleranz liegt.

9. Verfahren nach Anspruch 8, bei dem die Schritte des Bereitstellens eines Frequenzzählers (54) und des Bereitstellens einer Steuerung (56) die Verwendung der Steuerung (56) beinhalten, um den Mikroprozessor (12, 36) zu veranlassen, einen Ausgangs-N-Bit-Abstimmcode an den Digital/Analogwandler (26, 52) für die zweite Frequenz f₁ auszugeben, wobei der Schritt des Bereitstellens eines Frequenzzählers (54) die Verwendung des Frequenzzählers (54) beinhaltet, um ein zweites gesendetes Frequenzsignal vom Sender (10) zu empfangen, die Steuerung (56) auf ein Signal reagiert, das für das zweite gesendete Frequenzsignal vom Frequenzzähler (54) kennzeichnend ist, die Steuerung (56) das zweite gesendete Frequenzsignal mit der zweiten Frequenz f₁ vergleicht, um zu ermitteln, ob das zweite gesendete Frequenzsignal innerhalb einer vorbestimmten Toleranz der zweiten Frequenz f₁ liegt, und die Steuerung (56) den Mikroprozessor (12, 36) veranlasst, den Ausgangs-N-Bit-Abstimmcode für die zweite Frequenz f₁ in Abhängigkeit davon zu erhöhen oder zu vermindern, ob das zweite gesendete Frequenzsignal größer oder geringer ist als die zweite Frequenz f₁, wenn das zweite gesendete Frequenzsignal nicht innerhalb der vorbestimmten Toleranz liegt.

10. Verfahren nach Anspruch 7, bei dem der Schritt des Bereitstellens einer Oszillatorschaltung (18, 44) das Bereitstellen einer Oszillatorschaltung (18, 44) beinhaltet, die eine Varaktordiode enthält, die die Mittenbetriebsfrequenz der Oszillatorschaltung abstimmt.

11. Verfahren nach Anspruch 7, bei dem der Schritt des Bereitstellens einer Oszillatorschaltung (18, 44) das Bereitstellen einer Oszillatorschaltung (18, 44) beinhaltet, die einen Verstärker und eine akustische Oberflächenwellen-Rückkopplungsschaltung enthält.

## Revendications

1. Emetteur (10) pour émettre une séquence prédéterminée de bits de données par modulation par déplacement de fréquence, de sorte que l'émetteur (10) émet une première fréquence f₀ pour représenter un bit « 0 » et une deuxième fréquence f₁ pour représenter un bit « 1 », le dit émetteur (10) comprenant :
un microprocesseur (12, 36) qui commande le fonctionnement de l'émetteur (10), le dit microprocesseur (12, 36) engendrant la séquence de bits de données ;
un circuit oscillateur (18, 44) qui engendre un signal de sortie de fréquence qui correspond à la séquence de bits de données, le dit circuit oscillateur (18, 44) incluant un composant (24, 50) qui accorde la fréquence centrale de fonctionnement du circuit oscillateur (18, 44) ; et
un convertisseur numérique-à-analogique (26, 52) qui répond à un code d'accord à N bits fourni par le microprocesseur (12, 36), le dit convertisseur numérique-à analogique (26, 52) ayant une sortie connectée au composant (24, 50) qui accorde le circuit oscillateur (18, 44), dans lequel le code d'accord à N bits appliqué au convertisseur numérique-à-analogique (26, 52) ajuste un signal de commande appliqué au composant (24, 50) qui accorde la fréquence du circuit oscillateur (18, 44) de sorte qu'un premier code d'accord à N bits est appliqué au convertisseur numérique-à-analogique (26, 52) pour émettre la première fréquence f₀ et un deuxième code d'accord à N bits est appliqué au convertisseur numérique-à-analogique (26, 52) pour émettre la deuxième fréquence f₁, dans lequel le signal de commande comprend une tension correspondant au code d'accord à N bits.

2. Emetteur (10) selon la revendication 1, dans lequel le convertisseur numérique-à-analogique (26, 52) est un réseau résistif en échelle R - 2R.

3. Emetteur (10) selon la revendication 1, dans lequel l'émetteur (10) répond à une unité de commande (56) de façon à accorder l'émetteur (10), la dite unité de commande (56) pouvant fonctionner pour commander le microprocesseur (12, 36) afin qu'il fournisse un code d'accord à N bits initial au convertisseur numérique-à-analogique (26, 52) pour la première fréquence f₀ et qu'il active le circuit oscillateur (18, 44), un compteur de fréquence (54) qui répond à un premier signal de fréquence émis par l'émetteur (10), la dite unité de commande (56) répondant à un signal indicatif du premier signal de fréquence émis venant du compteur de fréquence (54), la dite unité de commande (56) comparant le premier signal de fréquence émis à la première fréquence f₀ de façon à déterminer si le premier signal de fréquence émis est dans les limites d'une tolérance prédéterminée de la première fréquence f₀, la dite unité de commande (56) pouvant fonctionner pour commander le microprocesseur (12, 36) afin qu'il augmente ou diminue le code d'accord à N bits initial pour la première fréquence f₀ en fonction de ce que le premier signal de fréquence émis est plus grand ou plus petit que la première fréquence f₀ si le premier signal de fréquence émis n'est pas dans la tolérance prédéterminée.

4. Emetteur (10) selon la revendication 3, dans lequel l'unité de commande (56) peut fonctionner pour que le microprocesseur (12, 36) fournisse un code d'accord à N bits initial au convertisseur numérique-à-analogique pour la deuxième fréquence f₁, le dit compteur de fréquence (54) répondant à un deuxième signal de fréquence émis par l'émetteur (10), la dite unité de commande (56) répondant à un signal indicatif du deuxième signal de fréquence émis venant du compteur de fréquence (54), la dite unité de commande (56) comparant le deuxième signal de fréquence émis à la deuxième fréquence f₁ de façon à déterminer si le deuxième signal de fréquence émis est dans les limites d'une tolérance prédéterminée de la deuxième fréquence f₁, la dite unité de commande (56) pouvant fonctionner pour commander le microprocesseur (12, 36) de sorte qu'il augmente ou diminue le code d'accord à N bits initial pour la deuxième fréquence f₁ en fonction de ce que le deuxième signal de fréquence émis est plus grand ou plus petit que la deuxième fréquence f₁ si le deuxième signal de fréquence émis n'est pas dans la tolérance prédéterminée.

5. Emetteur (10) selon la revendication 1, dans lequel le composant (24, 50) qui accorde le circuit oscillateur (18, 44) est une diode à capacité variable ou varactor.

6. Emetteur (10) selon la revendication 1, dans lequel le circuit oscillateur (18, 44) comprend un amplificateur et un circuit de réaction d'onde acoustique de surface.

7. Procédé d'accord d'un émetteur (10) pour transmettre une séquence de bits de données, dans lequel l'émetteur émet une première fréquence f₀ pour représenter un bit « 0 » et une deuxième fréquence f₁ pour représenter un bit « 1 », le dit procédé comprenant les étapes de :
utilisation d'un microprocesseur (12, 36) qui commande le fonctionnement de l'émetteur (10) ;
utilisation d'un circuit oscillateur (18, 44) qui engendre un signal de sortie de fréquence prédéterminée, le dit circuit oscillateur (18, 44) incluant un composant (24, 50) qui accorde la fréquence de fonctionnement centrale du circuit oscillateur (18, 44) ; et
utilisation d'un convertisseur numérique-à-analogique (26, 52) qui reçoit un code d'accord à N bits fourni par le microprocesseur (12, 36), le dit convertisseur numérique-à-analogique (26, 52) appliquant un signal de commande au composant (24, 50) qui accorde la fréquence centrale du circuit oscillateur (18, 44), dans lequel le code d'accord à N bits commande le signal de commande appliqué au composant (24, 50) qui accorde la fréquence du circuit oscillateur (18, 44) de sorte qu'un premier code d'accord à N bits est appliqué au convertisseur numérique-à-analogique (26, 52) pour émettre la première fréquence f₀ et un deuxième code d'accord à N bits est appliqué au convertisseur numérique-à-analogique (26, 52) pour émettre la deuxième fréquence f₁, dans lequel le signal de commande comprend une tension correspondant au code d'accord à N bits.

8. Procédé selon la revendication 7, comprenant en outre les étapes d'utilisation d'un compteur de fréquence (54) et d'utilisation d'une unité de commande (56), la dite étape d'utilisation d'une unité de commande (56) incluant l'utilisation de l'unité de commande (56) pour commander le microprocesseur (12, 36) de manière à fournir un code d'accord à N bits initial au convertisseur numérique-à-analogique (26, 52) pour la première fréquence f₀ et à activer le circuit oscillateur (18, 44), la dite étape d'utilisation d'un compteur de fréquence (54) incluant l'utilisation du compteur de fréquence (54) pour recevoir un premier signal de fréquence émis par l'émetteur (10) lorsque l'unité de commande (56) active le circuit oscillateur (18, 44), la dite unité de commande (56) comparant le premier signal de fréquence émis à la première fréquence f₀ de façon à déterminer si le premier signal de fréquence émis est dans les limites d'une tolérance prédéterminée de la première fréquence f₀, la dite unité de commande commandant le microprocesseur pour augmenter ou diminuer le code d'accord à N bits initial pour la première fréquence f₀ en fonction de ce que le premier signal de fréquence émis est plus grand ou plus petit que la première fréquence f₀ si le premier signal de fréquence émis n'est pas dans la tolérance prédéterminée.

9. Procédé selon la revendication 8, dans lequel les étapes d'utilisation d'un compteur de fréquence (54) et d'utilisation d'une unité de commande (56) comprennent l'utilisation de l'unité de commande (56) de sorte que le microprocesseur (12, 36) fournisse un code d'accord à N bits initial au convertisseur numérique-à-analogique (26, 52) pour la deuxième fréquence f₁, la dite étape d'utilisation d'un compteur de fréquence (54) incluant l'utilisation du compteur de fréquence (54) pour recevoir un deuxième signal de fréquence émis provenant de l'émetteur (10), la dite unité de commande (56) répondant à un signal indicatif du deuxième signal de fréquence émis provenant du compteur de fréquence (54), la dite unité de commande (56) comparant le deuxième signal de fréquence émis pour la deuxième fréquence f₁ de façon à déterminer si le deuxième signal de fréquence émis est dans les limites d'une tolérance prédéterminée de la deuxième fréquence f₁, la dite unité de commande (56) agissant sur le microprocesseur (12, 36) de façon à augmenter ou diminuer le code d'accord à N bits initial pour la deuxième fréquence f₁ en fonction de ce que le deuxième signal de fréquence émis est plus grand ou plus petit que la deuxième fréquence f₁ si le deuxième signal de fréquence émis n'est pas dans la tolérance prédéterminée.

10. Procédé selon la revendication 7, dans lequel l'étape d'utilisation d'un circuit oscillateur (18, 44) comprend la préparation d'un circuit oscillateur (18, 44) qui inclut une diode de type varactor qui accorde la fréquence centrale de fonctionnement du circuit oscillateur.

11. Procédé selon la revendication 7, dans lequel l'étape d'utilisation d'un circuit oscillateur (18, 44) comprend l'utilisation d'un circuit oscillateur (18, 44) ayant un amplificateur et un circuit de réaction d'onde acoustique de surface.
